# EUROPEAN PATENT SPECIFICATION

(11) **EP 1 751 019 B1**
(45) Date of publication and mention of the grant of the patent: **12.03.2008**
(21) Application number: 05718421.0
(22) Date of filing: 12.04.2005
(51) Int. Cl.: B65D 25/20, B65D 81/107

(54) **A PACKAGE ASSEMBLY, IN PARTICULAR A RETURNABLE TYPE PACKAGE ASSEMBLY**
VERPACKUNGSANORDNUNG, INSBESONDERE MEHRWEG-VERPACKUNGSANORDNUNG
ENSEMBLE DE CONDITIONNEMENT, EN PARTICULIER ENSEMBLE DE CONDITIONNEMENT REUTILISABLE

(30) Priority: 13.04.2004 IT MI20040727
(43) Date of publication of application: 14.02.2007
(73) Proprietor: Orsey Venture LLC., Dover, DE 19901 (US)
(72) Inventor: COHEN, Plutarco, Bella Vista Panama (PA)
(74) Representative: Ponzellini, Gianmarco
(86) International application number: PCT/IB2005/000957
(87) International publication number: WO 2005/100181

(56) References cited:
- EP-A- 0 525 623
- WO-A-91/06477
- DE-A1- 1 960 113
- DE-U1- 9 201 608
- US-A- 4 050 604
- PATENT ABSTRACTS OF JAPAN vol. 1996, no. 12, 26 December 1996 (1996-12-26) & JP 08 198271 A (HONDA MOTOR CO LTD), 6 August 1996 (1996-08-06)

## Description

The present invention relates to a returnable package, i.e. a package to be employed for goods transportation which can be re-used and/or sent back to the consignor once emptied of its contents, for subsequent loading.

It is known that the so-called "returnable packages" are widely used for transportation and/or storage of any type of goods and for example apply to the sector of the so-called industrial and service packaging (in which sector the re-usable packages are employed to contain a plurality of items or smaller containers).

In the general structure of these packages the presence of different constituent elements is provided, which elements are mutually assembled around the product to be stored or transported or are first assembled and subsequently filled with the product.

It is known from EP 0525623 a plastic container element which has "knob areas" as an anti-slip safeguard on at least one of its surfaces, specifically preferably on its standing surface. In that prior art reference, the returnable package disclosed therein each of the "knob areas" defines a cluster of protuberances which are aligned along mutually parallel diagonal rectilinear lines: this may lead to relative sliding of one package relative to another package (when at least two of such packages are mutually stacked).

At the same time, in the prior art device the anti-slip safeguard features are only located on the lower surface of the bottom of the returnable package and on the upper surface of the top of the package itself: therefore, in case of lateral clamping of two of these packages, no adequate vertical friction may arise and an unsatisfactory stability of the "multi-package" during handling/transportation is to be noted.

It is also know from US 4050604 a disassemblable, reusable container system is provided which on assembly is substantially rectangular configuration providing for greater storage capacity, and on disassembly, is readily stackable in a relatively small area. The container system includes floor, bracing support, sidewall and lid members, respectively, which are interlockingly joined on to the other. Such a container is however not provided of any kind of grip means.

DE 1960113 shows a kind of chest having tapered side walls and a lid whereupon a series of corrugated linear protuberances are grouped in clusters; such clusters are aligned along the perimeter of the lid itself.

JP 08/198271 depicts a packing case for stacking, wherein rubbers,are placed in the corners of the upper lid in order to increase frictional resistance in stacking conditions; in this prior art reference, no clusters of grip means may be defined, since the rubbers are single elements well separated from a visual point of view.

It is also known from DE 9201608 a re-usable package presenting a side wall and two "base portions" which are securable to the side wall by means of releasable straps: in this prior art reference, no hint is given on the possible presence of grip means dedicated to increase frictional resistance between two or more packages set aside or one unto another.

Finally, it is known from WO 91/06477 a cushioned shipping assembly made of corrugated carton and foam inserts; even in this case, no reference or suggestion is made to the possible increase of stability of stacked of juxtaposed containers by means of increasing frictional resistance.

It is also to be noted that the different types of containers presently used in warehouses and/or in goods carriers, either if they are of the "disposable" type or of the "returnable" type, must meet predetermined requirements in terms of handiness (through use of lift trucks of different types) and in terms of structural coherence.

In the first case, two or more packages disposed in horizontal side by side relationship with each other are required to be laterally grasped by particular types of lift trucks, currently referred to as "jaw lift trucks" which act on the side faces of the packages and press them against each other; in this manner friction generated on the side faces of the packages in mutual contact enables lifting and handling of a coherent package assembly.

In the second case, a plurality of piled up (or otherwise stored) packages in a warehouse must be able to keep an intrinsic steadiness, avoiding slipping and/or relative displacements between the piled up packages (which displacements for example can be generated in response to vibrations induced by passage of heavy transport means such as railway trucks or articulated lorries through the warehouses) that can lead to clear risks of collapse of the piled up packages, which will obviously have repercussions in terms of safety of the staff present in these working areas.

All packages that are presently most widely spread have very serious drawbacks as regards the different use situations.

For instance, since traditional "disposable packages" (made of paperboard/expanded polystyrene/wood) are produced with materials having rather poor structural-strength features, they often force the goods that are to be introduced thereinto to be oversized, so that the goods themselves must bear either the strong lateral-compression stresses imposed by the "jaw" lift trucks, or the strong vertical-compression stresses resulting from piling up of several packaged items. It is therefore apparent that the intrinsic "mechanical inadequacy" of these traditional packages adversely affects the packaged products that will be much heavier than necessary and therefore more expensive.

In addition, presently known containers can have insufficient cohesion features under conditions of "multiple grip" (i.e. in the operating conditions involving grasping and handling of several package rows that must also be superposed), above all when the packaged goods are very heavy and when a great number of packages must be handled by means of the so-called jaw lift trucks. In fact, under these conditions the innermost containers must not be sufficiently retained by friction (which friction is generated as a consequence of the pressure exerted by the jaws of said lift truck) and therefore may have a tendency to slip downwards; once more this involves important risks connected with the possibility of damaging the goods and impairing safety of the work environment.

It is to be noted that also the relative movements between several packages can be dangerous not only during handling of same, but also when the packages are maintained under piling-up conditions (for example, in a shed or the loading compartment of a transport means); in fact it is possible that, due to different factors (particular shapes of the packaged goods, particular vibration or movement conditions of the transport means, and so on) the piled-up packages will tend to shift relative to each other.

A further drawback of the packages of known type (and more particularly the packages to be thrown away after use) is represented by waste disposal that has become a reason of serious worry both for social workers and for goods manufacturers; in fact, traditional "disposable" packages (consisting of box-shaped elements made of paperboard inside which the goods are stored, which goods can be protected by a series of shock-resistant shells made of expanded polystyrene or the like) in addition to not being very performing from the point of view of protection of the article of manufacture and of being much bulkier, are also of difficult disposal, above all in view of the recent rules (such as rules 94/62/EC, 2004/12 /EC, by which the European Community states the targets for recovery and recycling of package waste until the year 2008, or document "Green Paper - Integrated Product Policy" of February 7, 2001, introducing the concept of product planning and package integration from a sustainability point of view).

Therefore the present invention aims at providing a package and more particularly a package of the returnable type capable of obviating the above stated limits.

In more detail the present invention aims at making available a returnable package that is able to efficiently carry out structural tasks, so that it can absorb both "static" loads (occurring under piling-up and/or handling conditions) imposed by handling devices such as jaw lift trucks or lift trucks of any other type, and "impulse" loads originating from possible falls and/or shocks (thus avoiding resorting to oversizing of the items to be packaged and transported).

In addition, the present invention aims at providing a returnable package that, under conditions of mutual piling-up/side by side relationship with other packages of the same type forms a coherent assembly of high steadiness, or in other words, does not tend to move from the piled-up/side by side relationship condition.

It is also to be noted that the present invention aims at providing a returnable structural package enabling exploitation of the logistic transportation spaces (railway trucks, lorry trailers, and others) and/or storage spaces (vertical saturation of warehouses, sheds and so on) to be maximised; this aim can be achieved by minimising the "empty" spaces existing between the package and the goods, and finally results in general abatement of the costs not only connected with the logistic aspects (increase in the number of the stored articles of manufacture per square metre and/or increase in the saturation coefficient of the transport means), but also with the whole process concerning planning and manufacture of the package and even of the goods to be packaged therein.

A still further aim of the invention is to make available a returnable package having such a geometry that an optimal use of the logistic spaces is allowed and at the same time relative displacements between several packages of the same type under conditions of mutual piling-up/side by side relationship are prevented, irrespective of the shape of the items contained in the packages and/or without considering possible external trouble factors.

A no less important aim of the invention is to conceive a returnable package to be manufactured at low costs, with materials having a low environmental impact and a prolonged useful life, which is also of easy assembling and disassembling before and after use, and can be easily stored and transported in a reduced space.

The foregoing and further aims that will become more apparent in the following of the present description are achieved by a returnable package having the features of the appended claims.

By way of explanation of the present inventive idea, an embodiment of a returnable package in accordance with the present invention will be given hereinafter by way of non-limiting example and illustrated in the accompanying drawings, in which:

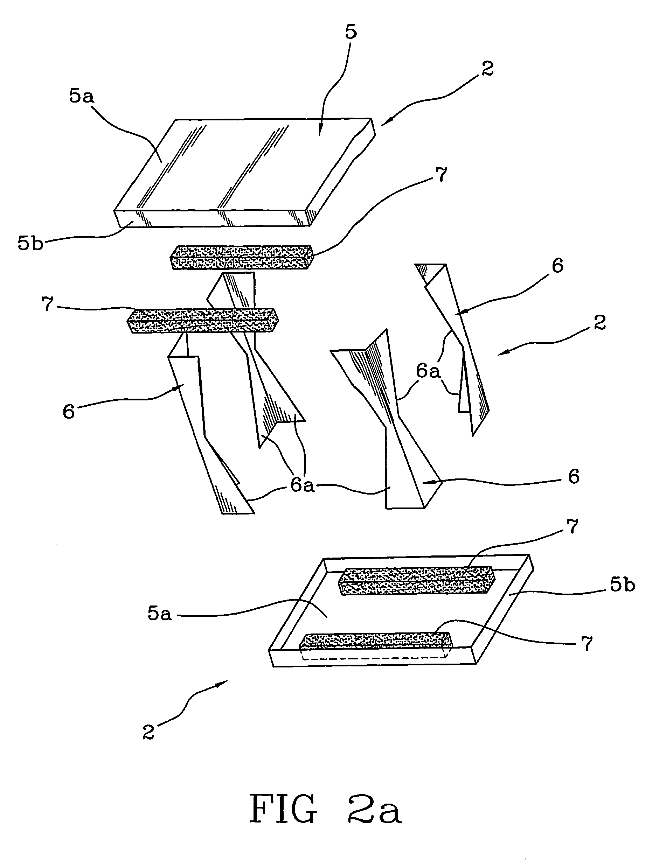

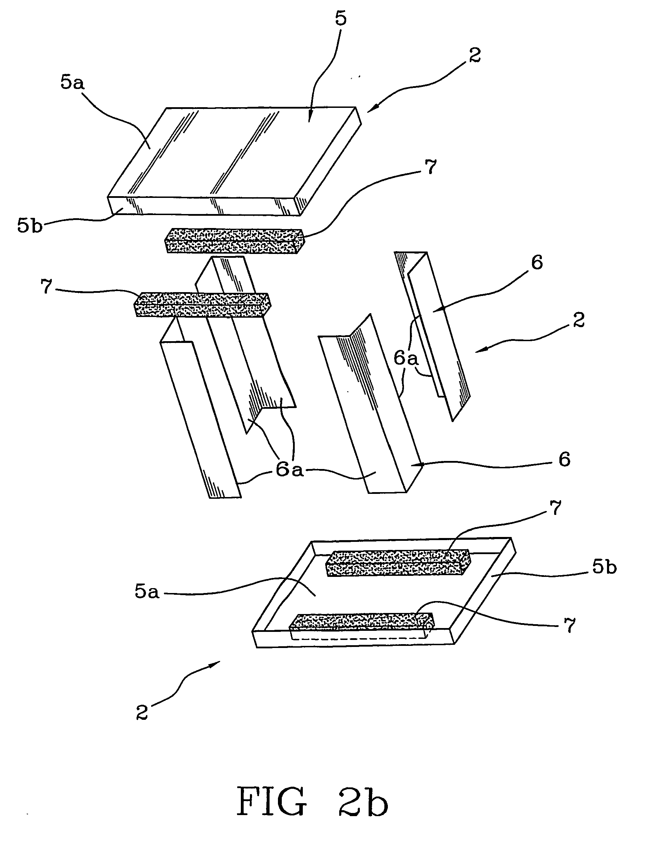

- Figs. 1a, 1b, 2a and 2b show exploded views of two different alternative embodiments of the package in accordance with the present invention;

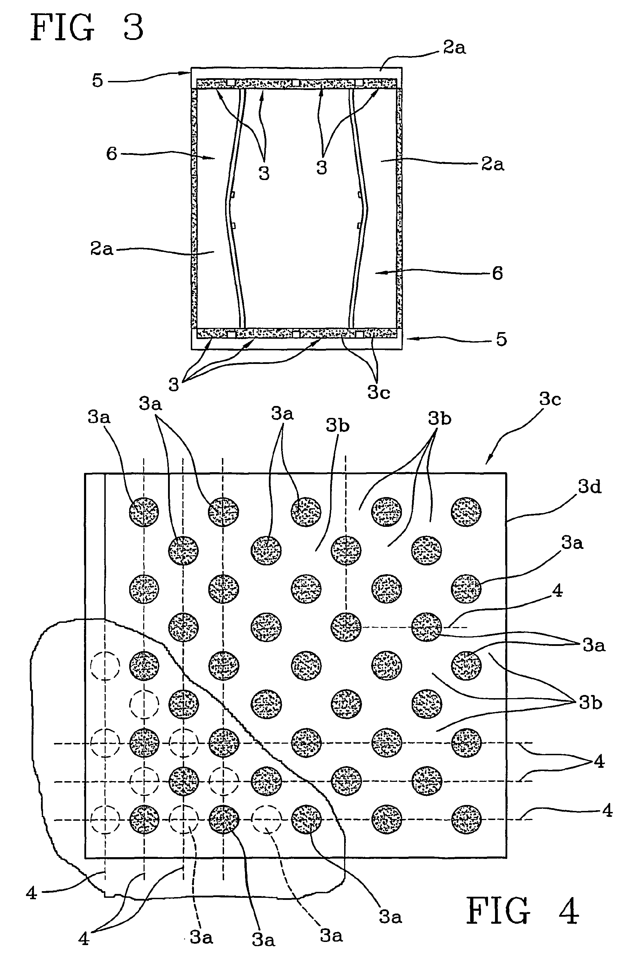

- Fig. 3 is a side view of a package as shown in Fig. 1 or 2, in an assembled arrangement;
- Fig. 4 shows a detail of a grip means associable with a first package, with a portion in chain line representing the grip means of a second package disposed close to the first one wherein the shown arrangement does not fall within the scope of the present invention;

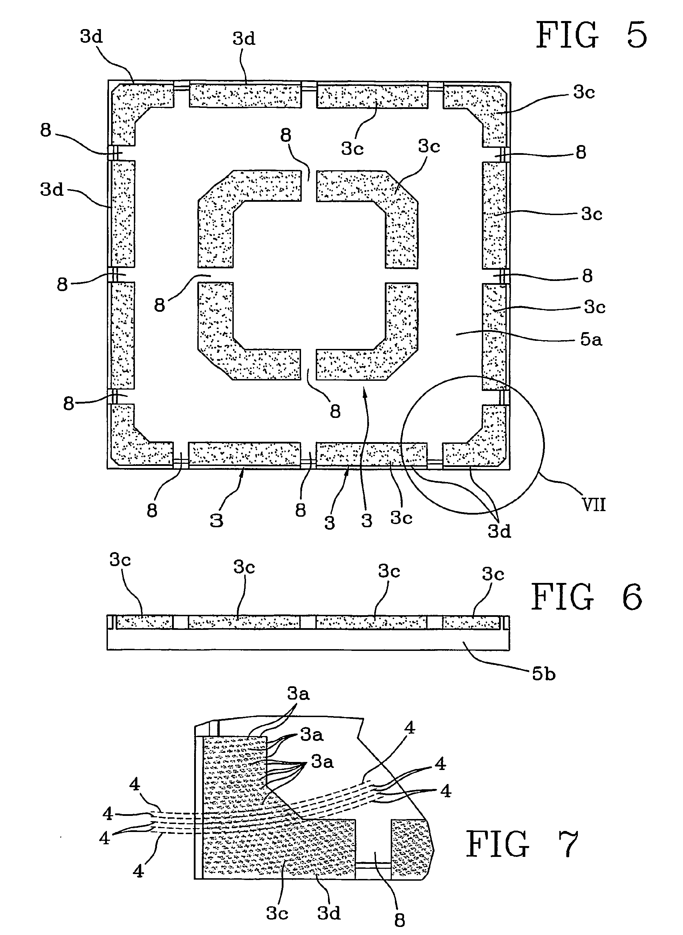

- Fig. 5 is a plan view of an element of the package in accordance with the present invention;
- Fig. 6 is a side view of the element in Fig. 5;
- Fig. 7 shows portion VII in Fig. 5 to an enlarged scale; and

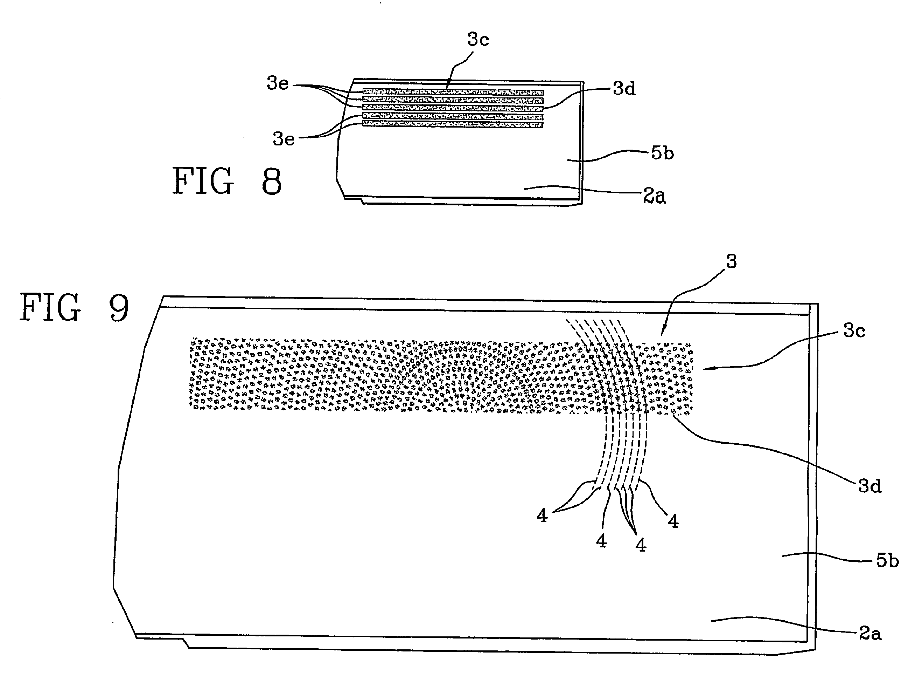

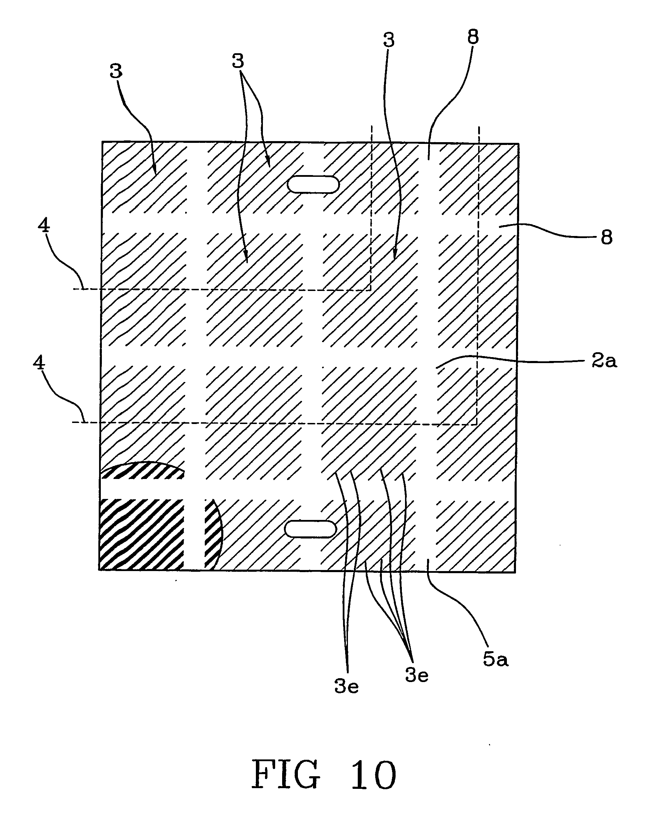

- Figs. 8, 9 and 10 show alternative embodiments of the grip means on the element in Fig. 5; and

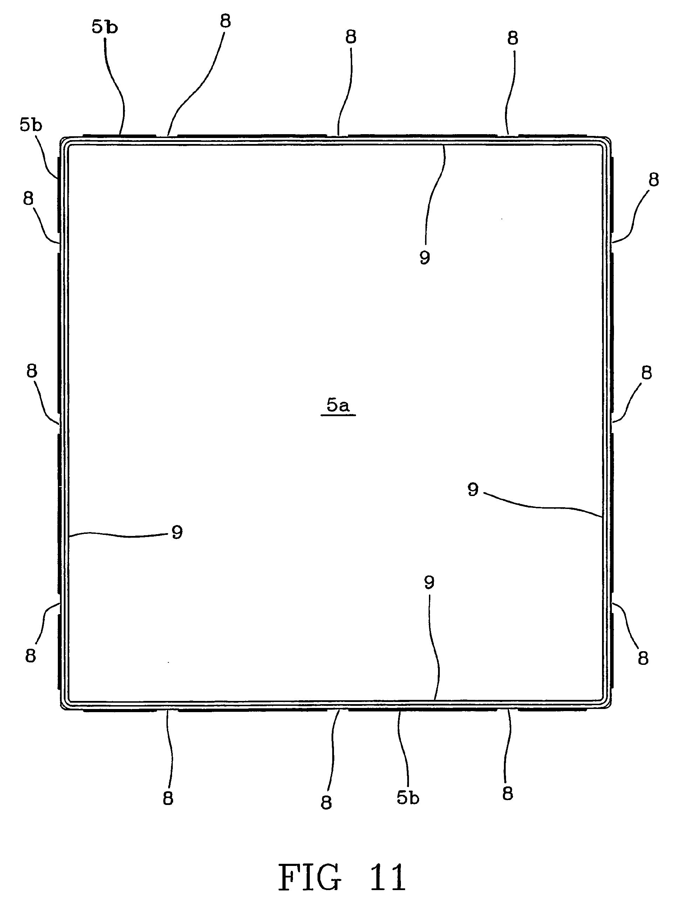

- Fig. 11 is a plan view of the element in Fig. 5 from the opposite direction than the one in Fig. 5.

With reference to the accompanying drawings, the package in accordance with the present invention is generally identified by reference numeral 1 and substantially comprises a predetermined number of confining elements 2 to be mutually and removably assembled to define a holding volume.

The confining elements 2 can be of any number and arrangement, provided they are adapted to contain at least one given type of items or goods, and have a corresponding number of interfacing surfaces 2a designed to be in mutual contact when two or more packages 1 are under conditions of piling up and/or side by side relationship (as it may happen during handling of one or more package rows or during storage in a shed, for example).

Advantageously, the present package further comprises grip means 3, present on the interfacing surfaces 2a of the confining elements 2; this grip means 3 is disposed in a matrix scheme in turn defining directrices 4 that extend so as to intersect at least one and preferably two directions of possible relative sliding that are mutually transverse and lie on the interfacing surfaces 2a.

In this manner, when two or more packages are disposed close to each other (at least at one of their interfacing surfaces 2a that substantially appear to be the outer surfaces of the confining elements 2), the grip means 3 mutually interacts so as to prevent one of the two packages from sliding relative to the other.

The grip means also 3 generates additional constraining reactions with respect to the friction reactions generated on the interfacing surfaces 2a; the relative orientation of the vectors of these constraining actions resulting from mutual approaching of particular structures of the grip means (to be described in the following) is advantageously connected with arrangement of the grip means along the directrices 4 which, suitably set, will make quite impossible any relative sliding between two packages 1 disposed close to each other along any direction lying in the contact plane of the packages.

In accordance with the present invention, the directrices 4 comprise a predetermined number of curvilinear stretches (circular or elliptic); these curvilinear stretches are suitably disposed in predetermined successions; in addition, still in accordance with the present invention a plurality of directrices 4 disposed in side by side relationship can be arranged, which directrices are preferably mutually parallel, within the above mentioned matrix scheme.

In the accompanying figures there are some examples of these directrices where, in the different cases shown, it is possible to see several concentric circular lines or broken lines describing given angles; it is also possible that some or all of these lines will have intersection points or, in other words, one and the same element belonging to the grip means 3 can be simultaneously disposed on two or more directrices 4.

Conveniently, in order to exert the above mentioned constraining reactions, the grip means 3 comprises engagement protrusions 3 a distributed along the directrices 4; the engagement protrusions 3a of a first package 1 interface with the corresponding grip means 3 of a second package 1 disposed in side by side relationship with the first one, generating constraining reactions that will be directed transversely of the directrices 4.

It is therefore apparent the a suitable arrangement of the directrices 4 will give rise to constraining reactions such directed as to prevent relative sliding of the two packages in any direction on one of the two interfacing surfaces 2a.

From a structural point of view, the engagement protrusions 3a have an extension axis emerging from one of said interfacing surfaces 2a and can have any shape provided it is suitable for interfacing with corresponding engagement protrusions 3a belonging to another package 1.

Advantageously, in order to facilitate the handling/compacting/storage operations, self-centring means is also present which is operatively active between the grip means 3 of at least two packages 1 disposed in mutual side by side relationship or mutually piled up; conveniently, the self-centring means is integrally formed at least on the engagement protrusions 3a to enable mutual interfacing of same. In other words, the conformation of the engagement protrusions 3a can be defined in such a manner that the engagement protrusions 3a belonging to different packages can penetrate into each other at least partly and at the same time can spontaneously reach a steady configuration capable of generating the appropriate constraining reactions.

According to an embodiment of the present invention, the engagement protrusions 3a have a tapered shape along their extension axis; this tapered shape can result from a frustoconical configuration, a truncated-pyramid configuration or an at least partly spheroidal configuration. It will be appreciated that the just described shapes (given for purposes of illustration and not of limitation) enable achievement of the technical effect of self-centring means, since two protrusion arrays 3a thus shaped can be mutually approached and when the respective side surfaces of the protrusions come into contact, the protrusions will guide each other so as to reach a precise positioning of the confining elements 2 (and, as a result, of packages 1).

It is also possible for the self-centring means to be made in other different ways and for the protrusions 3a to have different shapes; for instance, the engagement protrusions 3a can have a cylindrical shape along their extension axis.

To further improve coupling between two packages disposed close to each other, the grip means 3 can further comprise engagement recesses 3b the shape of which matches that of the engagement protrusions 3a at least partly; advantageously, these engagement recesses 3b can be disposed along the directrices 4 preferably alternated with the engagement protrusions 3a (and in this manner can be engaged by the protrusions 3a of another package, thereby increasing steadiness of the mutual connection between two approached packages and also further increasing the self-centring effect).

The engagement recesses 3b can be merely defined in the space included between at least two engagement protrusions 3a or, depending on requirements, can be formed in the confining elements 2 following more complicated structures; for instance, the engagement recesses 3b can have an extension axis entering the interfacing surface and preferably consist of a frusto-conical cavity, a cavity in the form of a truncated pyramid or an at least partly spheroidal cavity (the shape of which can advantageously match that of the engagement protrusions 3a at least partly).

Obviously, should the protrusions 3a be of cylindrical shape, the engagement recesses 3b too will in turn consist of cylindrical cavities.

Generally, it is to be pointed out in any case that the grip means 3, during the handling operations with forklift trucks provided with jaws for multiple grip (or also of single grip depending on the operating requirements) ensures fitting coupling of several containers disposed in side by side relationship preventing downwards sliding of the containers themselves during lifting.

The protrusions 3a and/or recesses 3b can be advantageously disposed on concentric directrices 4 and can be distributed on the whole interfacing surface 2a (or outer surface) of one or more confining elements 2.

In accordance with a further feature of the present invention, the grip means 3 is formed into groups of sectors 3c delimited by predetermined contours 3d; for instance, with reference to the accompanying figures it is possible to see that these sectors 3c can be dist ributed according to a given space scheme (to be determined according to specific requirements, as detailed in the following). Sectors 3c practically delimit the regions on the interfacing surfaces where the grip means 3 is located.

Within sectors 3c, the grip means 3 itself is disposed according to a matrix scheme that can be different for each individual sector 3c or ideally repeated in each sector 3c; in order to ensure the greatest possibility of mut ual approaching and engagement for two packages 1, the matrix scheme described by the grip means will be preferably the same for all sectors 3c of two interfacing surfaces 2a designed to approach each other under piling up/packing conditions, in such a manner that mutual meshing of two sectors accommodating a given distribution of protrusions 3a and/or recesses 3b does not hinder a simultaneous mutual meshing of different sectors 3c. The edges 3d can have any shape (see the accompanying figures, for example), depending on requirements.

Optionally, the grip means 3 may comprise elongated protrusions 3a disposed parallel to each other and preferably gathered within suitably located and delimited sectors 3c. Within the scope of the present invention, still more preferably the elongated protrusions 3e belonging to different sectors 3c are parallel to each other, again for the purpose of improving mutual and simultaneous meshing of several protrusion/recess sectors present on the same interfacing surface 2a. Conveniently, the just described elongated protrusions 3e operate following the same principle previously illustrated and can be conceived in such a manner as to achieve a self-centring effect.

Depending on the different types of items/goods to be packaged, the confining elements 2 can be of any number and conformation, and the grip means 3 can be disposed with great freedom of choice on the respective interfacing surfaces 2a of one or more of the confining elements 2a.

In an embodiment of the present invention, the confining elements 2 comprise at least one base element 5 (that can be conveniently associated with a bottom portion or a top portion of an item to be packaged); this base element 5 has a main wall 5a (designed to constitute the package bottom or top) having a predetermined edge and secondary walls 5b emerging from the main wall 5a at the sides of said edge.

Conveniently, the grip means 3 is formed on the outer surfaces of the main wall 5a and/or the secondary walls 5b; for instance, in the accompanying figures it is possible to see that on the main wall 5a there is the presence of grip means 3 disposed in two concentric series of sectors 3d, in which the protrusions 3a are disposed on substantially circular directrices (ideally going on from one sector to the other), while the secondary walls 5b have elongated protrusions 3e formed into groups of sectors 3c having quadrangular (rectangular, for example) edges 3d; these elongated protrusions 3e are disposed on the interfacing surface 2a of at least one of the secondary walls 5b and extend in a direction parallel to the edge of the main wall 5a.

In more detail, the base element 5 comprises a predetermined number of sectors 3c having grip means 3 on the interfacing surface 2a of the main wall 5a (but it is also possible to set these sectors 3c on at least one secondary wall, should it be necessary due to specific requirements); conveniently, these sectors 3d are formally divided into two groups the first of which comprises sectors disposed in the vicinity of the edge of the main wall 5a and the second of which comprises sectors disposed along an inner crown 5c arranged internally of the edge of the main wall 5a and at a substantially centred position relative to said main wall.

It is to be pointed out that the just described arrangement of sectors 3d is advantageous during manufacture of the main element 5 (which element can be for example obtained by moulding or injection moulding of plastic materials such as polypropylene or the like); actually, this arrangement of the grip means 3 enables balanci ng of the material masses during formation of the workpiece thus ensuring flatness of the main wall 5a.

It is to be pointed out that the achieved flatness enables a constant support to be obtained on at least three points of the package when the latter is handled on parallel conveyor belts; on the other hand, the presence of this type of "perfectly planar" support is important in order to avoid package 1 from rotating when it is handled by parallel rollers (in other words, the just described feature allows axial advancing and correct front orientation of package 1 relative to the roller conveyor or belt conveyor).

In a further alternative embodiment of the present invention, the base element 5 comprises elongated protrusions 3e disposed in sectors 3c having edges 3d of quadrangular (rectangular, for example) shape disposed in a matrix scheme on the interfacing surface 2a of the main wall 5a; in this case the elongated protrusions 3e extend in a direction transverse to at least one side of one of the edges 3d (so that they appear to be directed parallel to a diagonal of the main wall).

In order to better explain the present invention, it is pointed out that by the term "transverse" it is intended a direction or (real or ideal) line forming a given angle different from zero with the edge or corner of the main wall 5a and/or of at least one of the secondary walls 5b.

For assembly of package 1, the base element 5 further comprises means 9 for coupling with at least another confining element 2 (that will preferably be an upright 6 or a crosspiece or the like); this coupling means 9 will be of any type and may for example comprise a peripheral groove extending (at least partly) on the edges of the secondary faces 5b opposite to the edge of the main wall 5a (and/or on the face of the main wall 5a opposite to the interfacing surface 2a), which in turn is designed to receive, under operating conditions, an engagement abutment (belonging to the upright 6 or any other type of confining element 2) conforming in shape to the main wall itself at least partly.

In more detail as regards the embodiment of the package shown in the figures, the uprights 6 can be interposed between two base elements 5 so as to define a holding volume of a substantially prismatic shape and more preferably parallelepiped shape.

In this manner according to the present invention, a returnable package is obtained by use of an open "container" as the base/lid and a plurality of "load bearing columns" enabling coupling by fitting into the "base" and the "lid" (through the above described grooves or equivalent technical means).

Depending on the specific requirements, the uprights 6 will have any cross sect ion and/or conformation; for instance, they can consist of section members having a hollow and closed section or a solid section.

Conveniently, at least one and preferably all of the uprights 6 seen in cross section consist of a thin wall and define a concavity in a direction transverse to a longitudinal extension axis of the upright itself (for instance, this cross section will have a V-shaped, L-shaped or more preferably C-shaped conformation).

The just described conformation of the uprights 6 allows a great compactness to be obtained when package 1 is dismantled; in fact, the uprights 6 thus shaped can be disposed in side by side relationship and superposed on each other and at the same time can be stored within two mutually-approached main elements 5 to form a box-shaped element (keeping the longitudinal inner angle of the "angular columns" as the support point); in this way a great reduction in the volume of the container for return transportation is obtained.

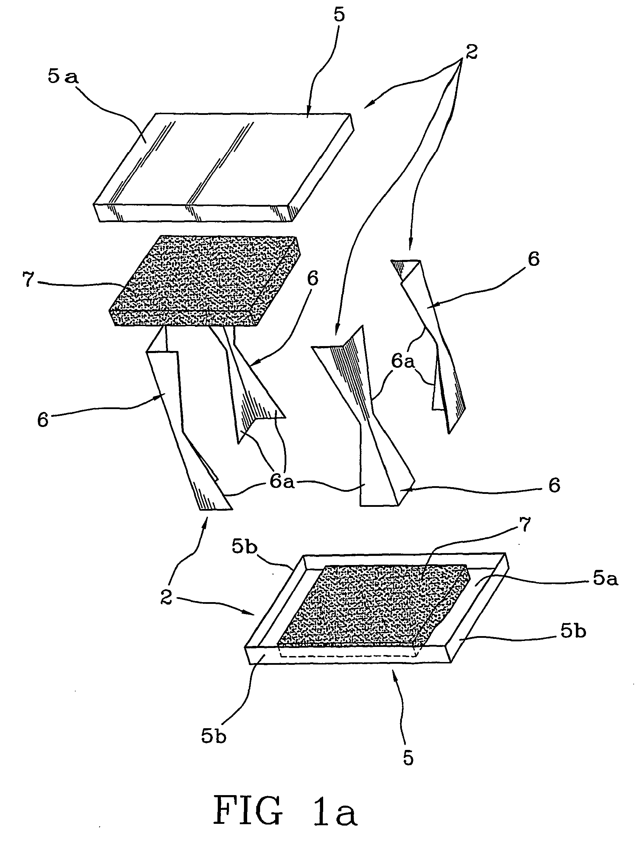

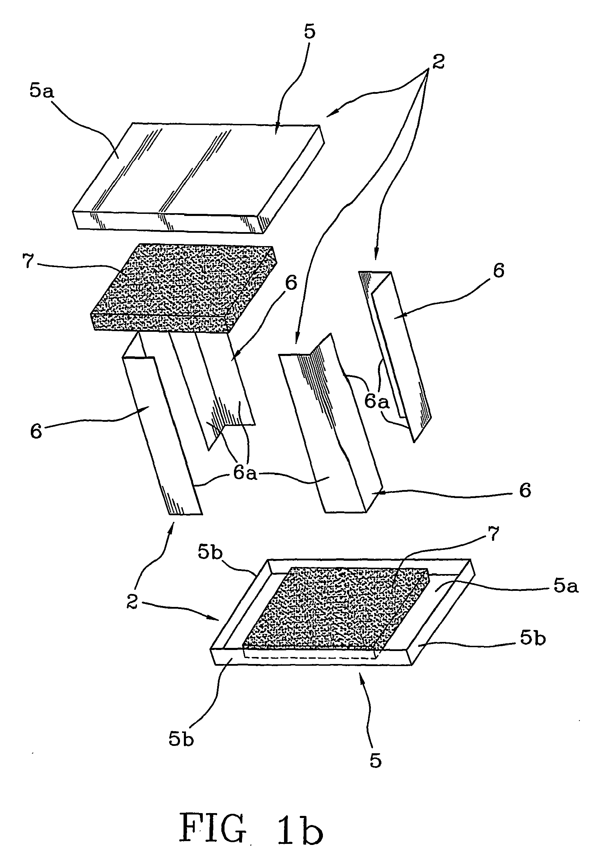

From a structural point of view, an upright has at least one and preferably two walls co-operatively defining the cross section shape; these walls in turn have a side edge 6a to be given any conformation depending on requirements. In the embodiment shown in Fig. 1 it is possible to see that this side edge 6a has a converging-diverging extension in the direction of the longitudinal extension axis of the upright 6; due to this construction architecture, possible intrusions of the upright into the holding volume can be advantageously prevented on occurrence of deformations induced thereon during the handling or storage operations of package 1.

Obviously, the edge 6a can have other extensions depending on specific requirements; for instance, for obtaining the maximum simplest construction a linear edge preferably parallel to the longitudinal extension axis of the upright 6 can be set.

Advantageously, the package in accordance with the present invention may further comprise shock-resistant means that can be operatively activated within the holding volume and between the package 1 itself and an item contained therein. In other words, the holding volume can accommodate shock-absorbers that are previously coupled with the rigid parts (base elements 5 and uprights 6) forming the package and the task of which is to protect the article of manufacture contained therein. The shock-resistant means 7 can be made of different materials (that in turn can be re-usable materials), such as expanded polypropylene, and can be suitably positioned relative to the uprights and/or base elements.

Operatively, the shock-resistant means 7 enables uncoupling of the article of manufacture to be packaged relative to the "structural shell" consisting of the confining elements 2, so as to cause absorption of the vibrations and kinetic energy that is produced when the packaged item falls or is submitted to impacts as a result of wrong operations.

Should it be necessary (when particularly heavy uses are provided, for example), the present package may comprise additional stiffening means associated with the confining elements 2, such as reinforcing ribs, additional latticeworks and so on; this additional stiffening means will be suitably positioned at the inside and/or outside of the holding volume.

Should the stiffening means be positioned within the confining elements 2 (or in other words, if said means faces the holding volume or are formed in the faces opposite to the interfacing surfaces 2a), the means 2a can be advantageously used as anchoring means for the shock-resistant means 7; actually, due to the presence of possible ribs (or equivalent structures) at the inside of the confining elements 2, through a suitable conformation of the shock-resistant means 7 (in turn having recesses at least partly matching the shape of said ribs or equivalent means), a steady relative positioning between the elements 2 and shock-absorbers 7 can be maintained.

At the same time it will be appreciated that arrangement of the ribs on the "inner" faces of elements 2 allows a great geometric simplicity of the outer surfaces of package 1 to be obtained, so that these surfaces can be cleaned more easily, are more regular and more suitable for resting on planes or being handled by sliding (without encountering undesirable stoppages).

Still for the purpose of offering more structural coherence (if required), additional confining elements (not shown in the accompanying drawings) can be set and interposed between the confining elements 2 and preferably the uprights 6 at a median point thereof; these additional confining elements can merely consist of cross-pieces extending between two adjacent uprights and can also house suitably disposed and shaped shock-resistant means 7.

To enable the package to be correctly maintained in an assembled condition, the package itself can have housing means designed to receive pulling elements (such as straps or the like); this housing means can be formed in at least one base element 5 and can merely consist of grooves and/or recesses included between two or more sectors 3d, through which said straps can be inserted and then tensioned.

With reference to the accompanying drawings, it is possible to see that on the side walls/faces as well as on the outer base wall/ face of the base/lid, shallow grooves have been formed for passage of straps or other fastening means.

The present invention can be put into practice using a plurality of different materials, provided the choice of said materials and consequent sizing of the different confining elements (and possible accessory parts) give the desired degree of mechanical performance; taking into account this point of view, one of the basic materials that can be used to accomplish the present type of package is polypropylene, but other plastic, metal or wood materials can give the same satisfactory results being at the same time advantageous from an economical point of view.

The invention achieves important advantages.

First of all, the particular construction architecture of the present package enables two or more packages disposed in mutual side by side and/or piled-up relationship to be maintained efficiently blocked; in fact, due to the presence and geometry of the grip means (that on the other hand can be indiscriminately positioned on different components of the package itself), every possible relative sliding of the packages along the contact plane of same is efficiently prevented.

At the same time, the presence of the grip means 3 enables package 1 to rest optimally on the ground or on the bottom of loading compartments also when non-perfect evenness/cleanness conditions of the bottom itself are present.

In this connection it is to be pointed out that the grip means as herein disclosed and claimed acts in an efficient manner both when several packages are handled by means of jaw lift trucks (and in this case said means enables the different side by side packages to efficiently exchange constraining reactions directed along the vertical planes in mutual side by side relatioship) and when several packages are stored upon each other forming several layers (and in this case said means enables cons training reactions to be exchanged both along vertical planes in mutual side by side relationship and along horizontal support planes).

It will be also appreciated that the wide variety of materials that can be used to define the different structural elements of the present package enables high mechanical features to be given to the package itself while at the same time substantially avoiding arising of problems connected with the environmental impact; in fact, due to a prolonged reuse in time of these packages, all problems connected with disposal of packages to be thrown away after use are avoided.

The shape of the different package components susceptible of dismantling is also advantageous in terms of package compactness under disassembled conditions, which has favourable repercussions on the logistic efficiency.

It will be also appreciated that the great simplicity of the different package components offers advantages from an economical point of view; in fact, the present invention enables exploitation of the logistic transportation compartments (railway trucks, lorry trailers or others) and/or storage compartments (warehouses, sheds and so on) to be maximised and, as a result, the logistic costs to be reduced; at the same time, due to the high structural performance of the present package, over-sizing of the goods to be packaged can be avoided; this generally involves an important abatement of all costs, i.e. not only of those connected with logistic problems but also as regards planning and manufacture of the package itself and even of the goods to be packaged therein. It will be finally appreciated that the reduction in the planning and manufacture costs of the package itself is also favourably influenced by the great simplicity of the package structure and great variety of the materials used.

## Claims

1. A package, preferably of the returnable type, comprising:
- a given number of confining elements (2) that are mutually assembled in a removable manner to define a holding volume, said confining elements having a corresponding number of interfacing surfaces (2a) designed to be in mutual contact when two or more packages (1) are under conditions of piling up and/or side by side relationship;
- grip means (3) associated on said interfacing surfaces (2a) of said confining elements (2), said grip means (3) being disposed in a matrix scheme, said matrix scheme defining directrices (4) intersecting at least two directions of possible relative sliding that are mutually transverse and lie on the interfacing surfaces (2a), **characterised in that**
- said directrices (4) comprise a predetermined number of curvilinear stretches that are circular or elliptic, said curvilinear stretches being disposed in predetermined successions and preferably in mutually parallel relationship within said matrix scheme.

2. A package as claimed in claim 1, **characterised in that** the grip means (3) comprises engagement protrusions (3a) distributed along said directrices (4).

3. A package as claimed in claim 2, **characterised in that** said engagement protrusions (3a) have an extension axis emerging from one of said interfacing surfaces (2a).

4. A package as claimed in anyone of the preceding claims, **characterised in that** it further comprises self-centring means operatively active between the grip means (3) of at least two packages (1) under conditions of mutual piling up and/or side by side relationship, said self-centring means being preferably integrally formed at least on the engagement protrusions (3a) to enable mutual interfacing of same.

5. A package as claimed in claim 3, **characterised in that** the engagement protrusions (3a) have a tapering shape along said extension axis, said tapering shape preferably defining a frusto-conical configuration, a truncated-pyramid configuration or an at least partly spheroidal configuration.

6. A package as claimed in claim 3, **characterised in that** the engagement protrusions (3a) have a cylindrical shape along said extension axis.

7. A package as claimed in anyone of the preceding claims, **characterised in that** the grip means (3) further comprises engagement recesses (3b) the shape of which matches that of said engagement protrusions (3a) at least partly and which are disposed along said directrices (4) preferably in an alternated sequence with the engagement protrusions (3a).

8. A package as claimed in claim 7, **characterised in that** said engagement recesses (3b) are defined in the space included between at least two engagement protrusions (3a).

9. A package as claimed in claim 7, **characterised in that** the engagement recesses (3b) have an extension axis entering said interfacing surface and preferably consist of a frusto-conical cavity, a cavity in the form of a truncated pyramid or an at least partly spheroidal cavity.

10. A package as claimed in claim 7, **characterised in that** the engagement recesses (3b) consist of a cylindrical cavity.

11. A package as claimed in anyone of the preceding claims, **characterised in that** the grip means (3) is formed into groups of sectors (3c) delimited by predetermined contours (3d).

12. A package as claimed in claim 11, **characterised in that** the grip means (3) further comprises elongated protrusions (3e) disposed in mutually parallel relationship, said elongated protrusions (3e) being preferably formed into groups at the inside of said sectors (3c), elongated protrusions (3e) belonging to different sectors (3c) being more preferably parallel to each other.

13. A package as claimed in anyone of the preceding claims, **characterised in that** the confining elements (2) comprise at least one base element (5) having a main wall (5a) with a predetermined edge and in addition having secondary walls (5b) emerging from said main wall (5a) at sides of said edge of said base element (5), the grip means (3) being formed on the outer surfaces of said main (5a) and/or secondary (5b) walls.

14. A package as claimed in claim 13, **characterised in that** the base element (5) comprises a given number of sectors (3c) having grip means (3) on the interfacing surface (2a) of the main wall (5a) and/or of at least one secondary wall (5b), said sectors (3d) being preferably disposed close to the edge of the main wall (5a) and more preferably along an inner crown (5c) disposed internally of the edge of the main wall (5a) and at a substantially centered position relative to said main wall.

15. A package as claimed in claim 13, **characterised in that** the base element (5) comprises elongated protrusions (3e) preferably disposed in sectors (3c) having edges (3d) of quadrangular shape disposed in a matrix scheme on the interfacing surface (2a) of the main wall (5a), more preferably the elongated protrusions (3e) extending in a direction transverse to at least one side of one of said edges (3d).

16. A package as claimed in claim 13, **characterised in that** the base element (5) comprises elongated protrusions (3e) preferably disposed in sectors (3c) having edges (3d) of quadrangular shape, that are set on the interfacing surface (2a) of at least one of said secondary walls (5b), more preferably the elongated protrusions (3e) extending in a direction parallel to the edge of the main wall (5a).

17. A package as claimed in claim 13, **characterised in that** the base element (5) further comprises means (9) for coupling with at least another confining element (2), said confining element (2) being preferably an upright (6), said coupling means (9) preferably comprising a peripheral groove extending at least partly on edges of the secondary faces (5b) opposite to the edge of the main wall (5a) and/or on the face of the main wall (5a) opposite to the interfacing surface (2a), said peripheral groove being designed to receive, under operating conditions, an engagement abutment at least partly conforming in shape to said groove.

18. A package as claimed in anyone of the preceding claims, **characterised in that** the confining elements (2) further comprise a predetermined number of uprights (6) associable with said base element (5), which uprights (6) can be preferably interposed between two base elements (5) so as to define a holding volume of substantially prismatic shape and more preferably in the form of a parallelepiped.

19. A package as claimed in claim 18, **characterised in that** at least one upright nas at least one, and preferably two, walls that in cooperation define the shape of said cross section, said walls having one side edge (6a), respectively.

20. A package as claimed in anyone of the preceding claims, **characterised in that** it further comprises shock-resistant means (7) that can be operatively activated at the inside of the holding volume and between the package (1) and an item contained therein.

21. A package as claimed in anyone of the preceding claims, **characterised in that** the confining elements (2) comprise additional stiffening means.

22. A package as claimed in anyone of the preceding claims, **characterised in that** it comprises additional confining elements that can be interposed between the confining elements (2) and preferably between the uprights (6).

23. A package as claimed in anyone of the preceding claims, **characterised in that** it further comprises housing means designed to receive pulling elements such as straps and the like, said housing means being preferably formed in at least one base element (5) and more preferably consisting of grooves and/or recesses included between two or more sectors (3d).

## Patentansprüche

1. Verpackungsanordnung, insbesondere Mehrwegverpackungsanordnung umfassend:
- eine vorgegebene Anzahl von Begrenzungsteilen (2), die miteinander abnehmbar zur Festlegung einer Aufnahme zusammensetzbar sind, wobei die Begrenzungsteile eine entsprechende Anzahl von Anschlussflächen (2a) aufweisen, die dazu bestimmt sind, beim Stapeln und/oder Aneinanderlegen von zwei oder mehreren Verpackungsanordnungen (1) gegenseitig in Berührung zu treten;
- Greifmittel (3), die den Anschlussflächen (2a)der Begrenzungsteile (2) zugeordnet sind, wobei die Greifmittel (3) in einem Matrixmuster angeordnet sind, wobei das Matrixmuster Richtungslinien (4) festlegt, die mindestens zwei Richtungen einer relativen Gleitmöglichkeit schneiden, die zueinander quer liegen und an den Anschlussflächen (2a) liegen, **dadurch gekennzeichnet, dass**:
- die Richtungslinien (4) eine vorgegebene Anzahl von gekrümmten Abschnitten umfassen, die kreisförmig oder elliptisch sind, wobei die gekrümmten Abschnitte in vorgegebenen Reihenfolgen und bevorzugter Weise zueinander parallel innerhalb des Matrixmusters angeordnet sind.

2. Verpackungsanordnung nach Anspruch 1, **dadurch gekennzeichnet, dass** die Greifmittel (3) Angriffsnasen (3a) aufweisen, die längs der Richtungslinien (4) angeordnet sind.

3. Verpackungsanordnung nach Anspruch 2, **dadurch gekennzeichnet, dass** die Angriffsnasen (3a) eine Abwicklungsachse aufweisen, die von einer der Anschlussflächen (2a) vorsteht.

4. Verpackungsanordnung nach einem beliebigen der vorstehenden Ansprüche, **dadurch gekennzeichnet, dass** sie überdies Selbstzentriermittel umfasst, die zwischen den Greifmitteln (3) von mindestens zwei Verpackungsanordnungen (1) unter Bedingungen gegenseitigen Aneinanderliegens und/ oder Stapelns wirken, wobei die Selbstzentriermittel bevorzugter Weise mindestens an den Angriffsnasen (3a) ausgenommen sind, um deren gegenseitigen Anschluss zu erlauben.

5. Verpackungsanordnung nach Anspruch 3, **dadurch gekennzeichnet, dass** die Angriffsnasen (3a) einen verjüngten Verlauf längs der Abwicklungsachse aufweisen, wobei der verjüngte Verlauf bevorzugter Weise eine kegelstumpfförmige oder pyramidenstumpfförmige oder mindestens teilweise kugelförmige Ausbildung festlegt.

6. Verpackungsanordnung nach Anspruch 3, **dadurch gekennzeichnet, dass** die Angriffsnasen (3a) einen zylindrischen Verlauf längs der Abwicklungsachse aufweisen.

7. Verpackungsanordnung nach einem beliebigen der vorstehenden Ansprüche, **dadurch gekennzeichnet, dass** die Greifmittel (3) überdies zu den Angriffsnasen (3a) mindestens teilweise gegenprofilierte Angriffsausnehmungen (3b) umfassen, die längs der Richtungslinien (4) bevorzugter Weise wechselweise gegenüber den Angriffsnasen (3a) angeordnet sind.

8. Verpackungsanordnung nach Anspruch 7, **dadurch gekennzeichnet, dass** die Angriffsausnehmungen (3b) im Raum zwischen mindestens zwei Angriffsnasen (3a) festgelegt sind.

9. Verpackungsanordnung nach Anspruch 7, **dadurch gekennzeichnet, dass** die Angriffsausnehmungen (3b) eine in der Anschlussfläche zurückgesetzte Abwicklungsachse und bevorzugter Weise eine kegelstumpfförmige oder pyramidenstumpfförmige oder mindestens teilweise kegelförmige Vertiefung aufweisen.

10. Verpackungsanordnung nach Anspruch 7, **dadurch gekennzeichnet, dass** die Angriffsausnehmungen (3b) eine zylindrische Vertiefung aufweisen.

11. Verpackungsanordnung nach einem beliebigen der vorstehenden Ansprüche, **dadurch gekennzeichnet, dass** die Greifmittel (3) in Sektoren (3c) zusammengestellt sind, die durch vorgegebenen Konturen (3d) begrenzt sind.

12. Verpackungsanordnung nach Anspruch 11, **dadurch gekennzeichnet, dass** die Greifmittel 3 überdies verlängerte Nasen (3a) umfassen, die zueinander parallel sind, wobei die verlängerten Nasen (3e) bevorzugter Weise innerhalb der Sektoren (3c) zusammengestellt sind, wobei die verschiedenen Sektoren (3c) angehörenden, verlängerten Nasen (3e) noch bevorzugter Weise zueinander parallel sind.

13. Verpackungsanordnung nach einem beliebigen der vorstehenden Ansprüche, **dadurch gekennzeichnet, dass** die Begrenzungsteile (2) mindestens einen Basisteil (5) umfassen, der eine Hauptwand (5a) mit einem vorgegebenen Rand und überdies Nebenwände (5b) aufweist, die von der Hauptwand (5a) im Bereich von Seiten des Randes des Basiselementes (5) vorstehen, wobei die Greifmittel (3) an den Außenflächen der Hauptwände (5a) und/oder Nebenwände (5b) ausgenommen sind.

14. Verpackungsanordnung nach Anspruch 13, **dadurch gekennzeichnet, dass** der Basisteil (5) eine vorgegebene Anzahl von Sektoren (3c) umfasst, die Greifmittel (3) an der Anschlussfläche (2a) der Hauptwand (5a) und/oder mindestens einer Nebenwand (5b) aufweisen, wobei die Sektoren (3d) bevorzugter Weise in der Nähe des Randes der Hauptwand (5a) und noch bevorzugter Weise längs eines Innenkranzes (5c) angeordnet sind, der innerhalb des Randes der Hauptwand (5a) und in einer gegenüber dieser letzteren im wesentlichen mittleren Stellung angeordnet ist.

15. Verpackungsanordnung nach Anspruch 13, **dadurch gekennzeichnet, dass** der Basisteil (5) verlängerte Nasen (3e) umfasst, die bevorzugter Weise in Sektoren (3c) mit viereckförmigen Rändern (3d) angeordnet sind, die gemäß einem Matrixmuster an der Anschlussfläche (2a) der Hauptwand (5a) angeordnet sind, wobei die verlängerten Nasen (3a) sich noch bevorzugter Weise in Querrichtung zu mindestens einer Seite eines der genannten Ränder (3d) erstrecken.

16. Verpackungsanordnung nach Anspruch 13, **dadurch gekennzeichnet, dass** der Basisteil (5) verlängerte Nasen (3e) umfasst, die bevorzugter Weise in Sektoren (3c) mit viereckigen Rändern (3d) angeordnet sind, die an der Anschlussfläche (2a) mindestens einer der Nebenwände (5b) angeordnet sind, wobei sich die verlängerten Nasen (3e) noch bevorzugter Weise in einer zum Rand der Hauptwand (5b) parallelen Richtung erstrecken.

17. Verpackungsanordnung nach Anspruch 13, **dadurch gekennzeichnet, dass** der Basist3eil (5) überdies Kuppelmittel (9) mit mindestens einem weiteren Begrenzungsteil (2) aufweist, das Begrenzungsteil (2) bevorzugter Weise eine Strebe (6) ist, wobei die Kuppelmittel (9) bevorzugter Weise eine umlaufende Nut umfassen, die sich mindestens teilweise an zum Rand der Hauptwand (5a) abgewandten, der Nebenfläche (5b) und/oder an der zur Anschlussfläche (2a) abgewandten Fläche der Hauptwand (5a) erstrecken, wobei die umlaufende Nut dazu bestimmt ist, unter Arbeitsbedingungen einen mindestens zu ihr teilweise gegenprofilierten Angriffsanschlag aufzunehmen.

18. Verpackungsanordnung nach einem beliebigen der vorstehenden Ansprüche, **dadurch gekennzeichnet, dass** die Begrenzungsteile (2) überdies eine vorbestimmte Anzahl von dem Basisteil (5) zuzuordnenden Streben (6) umfassen, wobei die Streben (6) bevorzugter Weise zwischen zwei Basisteilen (5) derart zwischenzuschalten sind, dass eine im wesentlichen prismatische Aufnahme und noch bevorzugter Weise quaderförmige Aufnahme festgelegt wird.

19. Verpackungsanordnung nach Anspruch 18, **dadurch gekennzeichnet, dass** mindestens eine Strebe eine und bevorzugter Weise zwei Wände aufweisen, die zusammen den Querschnitt festlegen, wobei die Wände jeweils eine Seitenkante (6a) aufweisen.

20. Verpackungsanordnung nach einem beliebigen der vorstehenden Ansprüche, **dadurch gekennzeichnet, dass** sie überdies stoßfeste Mittel (7) umfasst, die innerhalb der Aufnahme und zwischen der Verpackungsanordnung (1) und einem innerhalb derselben enthaltenen Gegenstand aktiviert werden können.

21. Verpackungsanordnung nach einem beliebigen der vorstehenden Ansprüche, **dadurch gekennzeichnet, dass** die Begrenzungsteile (2) zusätzliche Versteifungsmittel umfassen.

22. Verpackungsanordnung nach einem beliebigen der vorstehenden Ansprüche, **dadurch gekennzeichnet, dass** sie zusätzliche Begrenzungsteile umfasst, die zwischen den Begrenzungsteilen (2) und bevorzugter Weise zwischen den Streben (6) zwischengeschaltet werden können.

23. Verpackungsanordnung nach einem beliebigen der vorstehenden Ansprüche, **dadurch gekennzeichnet, dass** sie überdies Aufnahmemittel umfasst, die zur Aufnahme von Zugteilen, wie Bänder und ähnlichen bestimmt sind, wobei die Aufnahmemittel bevorzugter Weise in mindestens einem Basisteil (5) ausgenommen sind, und noch bevorzugter Weise aus Nuten und/oder Vertiefungen zwischen zwei oder mehreren Sektoren (3d) bestehen.

## Revendications

1. Emballage, de préférence du type réutilisable, comprenant:
- un nombre donné d'éléments de délimitation (2) qui sont assemblés réciproquement d'une façon amovible pour définir un volume de logement, lesdits éléments de délimitation ayant un nombre correspondant de surfaces d'interfaçage (2a) destinées à être en contact réciproque quand deux ou plusieurs emballages (1) sont en conditions d'empilage les uns sur les autres et/ou de rapprochement réciproque;
- des moyens de prise (3) associés sur lesdites surfaces d'interfaçage (2a) desdits éléments de délimitation (2), lesdits moyens de prise (3) étant disposés dans un schéma à matrice, ledit schéma à matrice définissant des lignes directrices (4) coupant au moins deux directions de coulissement relatif possible qui sont réciproquement transversales et sont disposées sur les surfaces d'interfaçage (2a),
**caractérisé en ce que**:
- lesdites lignes directrices (4) comportent un nombre prédéterminé de tronçons curvilignes qui sont circulaires ou elliptiques, lesdits tronçons curvilignes étant disposés selon des successions prédéterminées et de préférence étant réciproquement parallèles dans ledit schéma à matrice.

2. Emballage selon la revendication 1, **caractérisé en ce que** les moyens de prise (3) comportent des saillies d'engagement (3a) distribuées le long desdites lignes directrices (4).

3. Emballage selon la revendication 2, **caractérisé en ce que** lesdites saillies d'engagement (3a) ont un axe de développement émergeant de l'une desdites surfaces d'interfaçage (2a).

4. Emballage selon l'une quelconque des revendications précédentes, **caractérisé en ce qu'**il comporte en outre des moyens de centrage automatique actifs lors de leur fonctionnement entre les moyens de prise (3) d'au moins deux emballages (1) en conditions d'empilage les uns sur les autres et/ou de rapprochement réciproque, lesdits moyens de centrage automatique étant de préférence formés intégralement au moins sur les saillies d'engagement (3a) pour permettre leur interfaçage réciproque.

5. Emballage selon la revendication 3, **caractérisé en ce que** les saillies d'engagement (3a) ont une forme effilée le long dudit axe de développement, ladite forme effilée définissant de préférence une configuration tronconique, une configuration en tronc de pyramide ou une configuration au moins partiellement sphérique.

6. Emballage selon la revendication 3, **caractérisé en ce que** les saillies d'engagement (3a) ont une forme cylindrique le long dudit axe de développement.

7. Emballage selon l'une quelconque des revendications précédentes, **caractérisé en ce que** les moyens de prise (3) comportent en outre des évidements d'engagement (3b) dont la forme épouse au moins partiellement celle desdites saillies d'engagement (3a) et qui sont disposés le long desdites lignes directrices (4) de préférence selon une séquence alternée avec les saillies d'engagement (3a).

8. Emballage selon la revendication 7, **caractérisé en ce que** lesdits évidements d'engagement (3b) sont définis dans l'espace compris entre au moins deux saillies d'engagement (3a).

9. Emballage selon la revendication 7, **caractérisé en ce que** les évidements d'engagement (3b) ont un axe de développement rentrant dans ladite surface d'interfaçage et ils comportent de préférence une cavité tronconique, une cavité en tronc de pyramide ou une cavité au moins partiellement sphérique.

10. Emballage selon la revendication 7, **caractérisé en ce que** les évidements d'engagement (3b) comportent une cavité cylindrique.

11. Emballage selon l'une quelconque des revendications précédentes, **caractérisé en ce que** les moyens de prise (3) sont groupés en secteurs (3c) délimités par des contours prédéterminés (3d).

12. Emballage selon la revendication 11, **caractérisé en ce que** les moyens de prise (3) comportent en outre des saillies allongées (3e) disposées réciproquement parallèles, lesdites saillies allongées (3e) étant de préférence groupées à l'intérieur desdits secteurs (3c), des saillies allongées (3e) appartenant à des secteurs différents (3c) étant, d'une façon encore plus préférée, parallèles les unes aux autres.

13. Emballage selon l'une quelconque des revendications précédentes, **caractérisé en ce que** les éléments de délimitation (2) comprennent au moins un élément de base (5) ayant une paroi principale (5a) avec un bord prédéterminé et en outre ayant des parois secondaires (5b) émergeant de ladite paroi principale (5a) aux côtés dudit bord dudit élément de base (5), lesdits moyens de prise (3) étant formés sur la surface extérieure desdites paroi principale (5a) et/ou parois secondaires (5b).

14. Emballage selon la revendication 13, **caractérisé en ce que** l'élément de base (5) comporte un nombre donné de secteurs (3c) ayant des moyens de prise (3) sur la surface d'interfaçage (2a) de la paroi principale (5a) et/ou d'au moins une paroi secondaire (5b), lesdits secteurs (3d) étant de préférence disposés proches du bord de la paroi principale (5a) et, d'une façon encore plus préférée, le long d'une couronne intérieure (5c) disposée à l'intérieur du bord de la paroi principale (5a) et à une position sensiblement centrée par rapport à ladite paroi principale.

15. Emballage selon la revendication 13, **caractérisé en ce que** l'élément de base (5) comporte des saillies allongées (3e) de préférence disposées dans des secteurs (3c) ayant des bords (3d) de forme quadrangulaire disposés dans un schéma à matrice sur la surface d'interfaçage (2a) de la paroi principale (5a), les saillies allongées (3e) s'étendant, d'une façon encore plus préférée, dans une direction transversale à au moins un côté de l'un desdits bords (3d).

16. Emballage selon la revendication 13, **caractérisé en ce que** l'élément de base (5) comporte des saillies allongées (3e) disposées de préférence dans des secteurs (3c) ayant des bords (3d) de forme quadrangulaire, lesquelles sont rangées sur la surface d'interfaçage (2a) d'au moins une desdites parois secondaires (5b), d'une façon encore plus préférée les saillies allongées (3e) s'étendant dans une direction parallèle au bord de la paroi principale (5a).

17. Emballage selon la revendication 13, **caractérisé en ce que** l'élément de base (5) comporte en outre des moyens (9) destinés à l'accouplement avec au moins un autre élément de délimitation (2), ledit élément de délimitation (2) étant de préférence un montant (6), lesdits moyens d'accouplement (9) comprenant de préférence une rainure périphérique s'étendant au moins partiellement sur des bords des faces secondaires (5b) opposés au bord de la paroi principale (5a) et/ou sur la face de la paroi principale (5a) opposée à la surface d'interfaçage (2a), ladite rainure périphérique étant destinée à recevoir, en conditions de fonctionnement, une butée d'engagement dont la forme épouse au moins partiellement celle de ladite rainure.

18. Emballage selon l'une quelconque des revendications précédentes, **caractérisé en ce que** les éléments de délimitation (2) comprennent en outre un nombre prédéterminé de montants (6) à associer audit élément de base (5), lesdits montants (6) pouvant être de préférence interposés entre deux éléments de base (5) pour définir un volume de logement de forme sensiblement prismatique et, d'une façon encore plus préférée, ayant la forme d'un parallélépipède.

19. Emballage selon la revendication 18, **caractérisé en ce qu'**au moins un montant a au moins une, et de préférence deux parois qui ensemble définissent la forme de ladite coupe transversale, lesdites parois ayant respectivement une arête latérale (6a).

20. Emballage selon l'une quelconque des revendications précédentes, **caractérisé en ce qu'**il comporte en outre des moyens antichoc (7) qui peuvent être activés de manière opérante à l'intérieur du volume de logement et entre l'emballage (1) et un article y contenu.

21. Emballage selon l'une quelconque des revendications précédentes, **caractérisé en ce que** les éléments de délimitation (2) comportent des moyens de raidissement additionnels.

22. Emballage selon l'une quelconque des revendications précédentes, **caractérisé en ce qu'**il comporte des éléments de délimitation additionnels qui peuvent être interposés entre les éléments de délimitation (2) et de préférence entre les montants (6).

23. Emballage selon l'une quelconque des revendications précédentes, **caractérisé en ce qu'**il comporte en outre des moyens de logement destinés à recevoir des éléments de traction tels que des courroies et similaires, lesdits moyens de logement étant de préférence formés dans au moins un élément de base (5) et d'une façon encore plus préférée comportant des rainures et/ou des évidements compris entre deux ou plusieurs secteurs (3d).
